# DEMANDE DE BREVET EUROPEEN

(11) **EP 1 803 634 A1**
(43) Date de publication de la demande: **04.07.2007**
(21) Numéro de dépôt: 06126798.5
(22) Date de dépôt: 21.12.2006
(51) Int. Cl.: B62K 15/00

(54) **Vélo pliable articule au niveau du boitier de pédalier**

(30) Priorité: 21.12.2005 FR 0513043
(71) Demandeur: Cycles Lapierre, 21000 Dijon (FR)
(72) Inventeur: Lapierre, Gilles, 21160 Marsannay la Côte (FR); Antonot, Emmanuel, 21490 Clenay (FR); Gribaudo, Rémi, 21000 Dijon (FR)
(74) Mandataire: Tetaz, Franck Claude Edouard

(57) **Abrégé**

La présente invention concerne une bicyclette pliable du type comportant d'une part un châssis dit cadre (1) et d'autre part un bras arrière (15) solidaire du cadre (1) et portant l'axe du moyeu d'une roue arrière motrice (16), ladite bicyclette est remarquable en ce que le bras arrière (15) est constitué d'au moins deux bras dits horizontaux (19a,19b) dont l'une des extrémités dite proximale est articulée au cadre et dont l'autre extrémité dite distale, portant l'axe du moyeu de la roue arrière motrice (16), est solidaire de l'une des extrémités de deux bras dits obliques arrières (20a,20b), l'autre extrémité dite proximale desdits bras obliques arrières (20a,20b) étant munie de moyens de solidarisation mâles ou femelles aptes à coopérer avec des moyens de solidarisation femelles ou respectivement mâles du tube de selle (2) ou du tube horizontal (4) de manière à ce qu'un utilisateur puisse solidariser ou désolidariser le bras arrière (15) du cadre (1) sans utiliser de pièce de fixation libre.
Le dispositif d'articulation du bras arrière est constitué d'un mons fixe hémi-annulaire et d'un mons mobile hémi-annulaire, lesdits mons étant solidarisés à des roulements montés sur l'axe du pédalier.
Un autre objet de l'invention concerne un sac destiné à recevoir une bicyclette pliable conforme à l'invention.

## Description

La présente invention concerne un vélo pliable apte à être plié et rangé, après retrait des roues, dans un sac sensiblement parallélépipédique.

Dans le domaine des cycles, on connaît bien des vélos pliables afin de limiter leur encombrement lorsqu'ils ne sont pas utilisés.

La plupart de ces vélos pliables sont constitués de petites roues et d'un cadre comportant un tube de selle vertical et un tube oblique muni dans sa partie centrale d'une articulation afin de plier le cadre suivant un axe vertical jusqu'à ce que la roue avant vienne au droit de la roue arrière.

De tels vélos pliables sont décrits notamment dans les brevets français FR 1 501 565, FR 1 443 948, FR 2 711 110 et dans les brevets américains US 2003/234509 et US 5,836,602.

Ce type de vélo pliable est destiné à une utilisation urbaine et n'est pas adapté à la pratique sportive du vélo de route classique. Un vélo de route classique est constitué d'un cadre triangulaire et de deux roues de grand diamètre. On entend par des roues de grand diamètre des roues présentant un diamètre supérieur ou égal à 650mm.

Afin de permettre aux pratiquants du vélo de route de transporter leur vélo en avion, en train, etc... pour pratiquer leur sport sur leur lieu de vacances par exemple, on a déjà imaginé des vélos pliables présentant des caractéristiques de vélo de route en configuration déplié.

C'est le cas, par exemple, du brevet européen EP 1 298 046 qui décrit un cadre de bicyclette constitué de deux sections assemblés de façon amovible en utilisant d'une part un collier pour assemblés les deux parties du tube oblique du cadre et une tige de selle comme un élément de raccordement pour former une jonction du tube de selle et du tube dit horizontal.

Ce type de vélo pliable présente l'inconvénient de nécessiter un temps de montage et de démontage long ainsi qu'une certaine précision lors de la mise en place du collier pour joindre les deux jonctions du cadre. Par ailleurs, la jonction des deux sections du cadre par un collier constitue un point de faiblesse du cadre qui limite sa rigidité et qui est ressentie par les utilisateurs. De plus, ce type de jonction de deux sections du cadre ne permet pas de réaliser les sections de cadre dans des tubes légers en aluminium ou en scandium notamment, imposant ainsi de réaliser les sections dans des tubes lourds en acier.

On connaît d'autres types de vélos pliables dans lesquels la roue arrière est solidaire d'un bras dit arrière monté pivotant autour du boîtier de pédalier ; c'est le cas, par exemple, du brevet américain US 6,279,935, du brevet européen EP 1 298 046 ou du brevet anglais GB 2 296 224.

Tous ces vélos pliables présentent l'inconvénient, outre de nécessiter des pièces amovibles de fixation susceptibles d'être égarées au cours du rangement et/ou du transport du vélo, rendant par la suite le vélo inutilisable, de présenter un encombrement important en position repliée.

L'un des buts de l'invention est donc de remédier à l'ensemble de ces inconvénients en procurant un vélo pliable de conception simple et peu onéreuse, présentant des caractéristiques similaires en terme de rigidité, de poids et de sensation pour le cycliste, aux caractéristiques d'un vélo classique de route ou tout terrain, facile à plier et déplier, tout en étant apte à être rangé après pliage dans un sac sensiblement parallélépipédique de faible encombrement.

A cet effet, et conformément à l'invention, il est proposé une bicyclette pliable du type comportant d'une part un châssis dit cadre portant un boîtier de pédalier et d'un tube de fourche portant une fourche à l'extrémité inférieure de laquelle est solidarisé l'axe de la roue avant de direction et à l'extrémité supérieure de laquelle sont solidarisés des moyens de direction, et d'autre part un bras arrière solidaire du cadre et portant l'axe du moyeu d'une roue arrière motrice, le couple moteur étant transmis à la roue motrice par une chaîne s'étendant entre un pignon menant solidaire du cadre et un pignon mené solidaire de l'axe du moyeu de la roue motrice ; ladite bicyclette est caractérisée en ce que le bras arrière est constitué de deux bras dits horizontaux dont l'une des extrémités dite proximale est articulée au cadre et dont l'autre extrémité dite distale est articulée respectivement à l'une des extrémités de deux bras dits obliques arrières, l'autre extrémité dite proximale desdits bras obliques arrières étant munie de moyens de solidarisation mâles ou femelles aptes à coopérer avec des moyens de solidarisation femelles ou respectivement mâles du cadre.

On comprend bien que, contrairement aux bicyclettes de l'art antérieur, aucune pièce de fixation libre susceptible d'être égarée n'est nécessaire pour son pliage ou son dépliage. Par ailleurs, l'articulation entre les bras horizontaux et les bras obliques du bras arrière permet de plier le vélo dans un volume restreint. De plus, la bicyclette suivant l'invention peut être réalisée avec des tubes en aluminium ou en scandium particulièrement légers contrairement aux bicyclettes de l'art antérieur.

Un autre objet de l'invention concerne un dispositif d'articulation d'un bras dit arrière portant le moyeu de la roue arrière d'une bicyclette sur un cadre portant un boîtier de pédalier remarquable en ce qu'il est constitué d'un mors fixe hémi-annulaire solidaire dudit bras arrière et à l'extrémité libre duquel est articulé un mors mobile hémi-annulaire muni de moyens de fixation dudit mors mobile au mors fixe, lesdits mors fixe et mobile étant positionnés sur le boîtier de pédalier de telle manière que le bras arrière soit monté pivotant autour de l'axe dudit boîtier de pédalier.

Chaque mors fixe hémi-annulaire comporte, avantageusement, une cheville sur laquelle est apte à venir s'emboîter le bras arrière.

D'autres avantages et caractéristiques ressortiront mieux de la description qui va suivre de plusieurs variantes d'exécutions, données à titre d'exemples non limitatifs, du vélo pliable conforme à l'invention en référence aux dessins annexés sur lesquels :
- la figure 1 est une vue de côté du vélo pliable conforme à l'invention en position dépliée,
- la figure 2 est une vue en perspective des moyens d'articulation du bras arrière sur le boîtier de pédalier du vélo conforme à l'invention,
- la figure 3 est une vue en coupe longitudinale des moyens d'articulation représentés sur la figure 2,
- la figure 4 est une vue de côté des moyens de solidarisation du bras arrière au tube de selle du vélo conforme à l'invention,
- la figure 5 est une vue de dessus des moyens de solidarisation du bras arrière au tube de selle suivant l'invention représentés sur la figure 4,
- la figure 6 est une vue de côté des moyens de solidarisation du guidon sur la potence du vélo conforme à l'invention,
- la figure 7 est une vue en perspective éclatée des moyens de fixation de la potence sur la fourche du vélo suivant l'invention,
- la figure 8 est une vue en coupe sagittale des moyens de fixation de la potence sur la fourche du vélo suivant l'invention représenté sur la figure 7,
- les figures 9 à 11 sont des vues de côté des différentes étapes de pliage du vélo conforme à l'invention,
- la figure 12 est une vue de côté du vélo plié suivant l'invention.

On décrira ci-après à titre d'exemple non limitatif une bicyclette pliable du type vélo tout terrain (VTT) ; néanmoins, la bicyclette pliable suivant l'invention pourrait être adaptée à un vélo dit de route ou similaire.

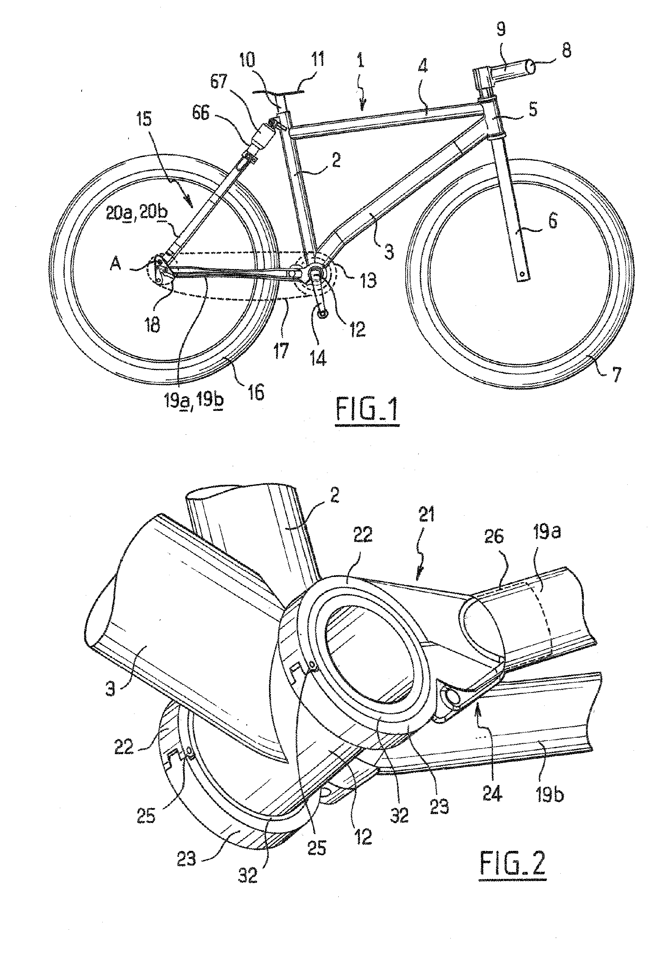

En référence à la figure 1, la bicyclette comprend un châssis 1 dit cadre triangulé constitué d'un tube de selle 2 globalement vertical, d'un tube oblique 3 assemblé par soudage à l'extrémité inférieure du tube de selle 2, un tube horizontal 4 dont les extrémités sont respectivement assemblées par soudage à l'extrémité supérieure du tube de selle 2 et à un tube de fourche 5 globalement vertical, le tube oblique 3 étant par ailleurs solidarisé audit tube de fourche 5 également par soudage. Ce tube de fourche 5 reçoit une fourche 6 du type télescopique portant à son extrémité inférieure l'axe du moyeu de la roue avant 7 de la bicyclette. Un guidon 8 est fixé de manière amovible, comme il sera détaillé plus loin, à l'extrémité libre d'une potence 9 solidaire de la fourche 5.

Le tube de selle 2 est apte à recevoir une tige de selle 10 comprenant à son extrémité supérieure une selle 11 sur laquelle prend position le cycliste.

Ledit tube de selle 2 comprend à son extrémité inférieure, c'est-à-dire à l'intersection du tube oblique 3 et du tube de selle 2, un boîtier de pédalier 12 portant de manière classique l'axe des pignons menant 13 communément appelés plateaux dont les axes de rotation sont coaxiaux. Des pédales 14 sont solidaires de l'axe des pignons menant 13 de part et d'autre du cadre 1 de la bicyclette.

Il va de soi que le cadre 1 de la bicyclette peut consister en un cadre dit « poutre » comportant uniquement un tube dit oblique 3 et un tube dit horizontal 4, les extrémités inférieure et supérieure du tube oblique 3 étant solidaires respectivement du boîtier de pédalier 12 et du tube de fourche 5. Une première extrémité du tube horizontal 3 porte la selle 11 et l'extrémité opposée est solidaire soit du tube de fourche 5 soit du tube horizontal 3.

De plus, la bicyclette peut consister en un cadre dit « poutre » comportant uniquement un tube dit oblique 3 et un tube dit de selle 2 ou comportant uniquement un tube dit de selle 2 et un tube horizontal 3 sans pour autant sortir du cadre de l'invention.

Ladite bicyclette comprend, par ailleurs, un bras arrière 15 solidaire du cadre 1 et portant l'axe du moyeu d'une roue arrière motrice 16, le couple moteur étant transmis à la roue motrice 16 par une chaîne 17, représentée en traits pointillés sur la figure 1, s'étendant entre un pignon menant 13 et un pignon mené 18 solidaire de l'axe du moyeu de la roue motrice 16. Le bras arrière 15 est constitué d'au moins deux bras dits horizontaux 19a, 19b, lesdits bras 19a et 19b s'étendant globalement parallèlement de part et d'autre du plan sagittal du cadre 1, dont l'une des extrémités dite proximale est articulée au cadre 1 autour d'une articulation A. L'autre extrémité dite distale desdits bras horizontaux 19a,19b porte l'axe du moyeu de la roue arrière motrice 16 et est articulée à l'une des extrémités dite distale de deux bras dits obliques arrières 20a, 20b. L'autre extrémité dite proximale desdits bras obliques arrières 20a, 20b est munie de moyens de solidarisation mâles ou femelles aptes à coopérer avec des moyens de solidarisation femelles ou respectivement mâles du tube de selle 2 ou du tube horizontal 3 du cadre 1 de manière à ce qu'un utilisateur puisse solidariser ou désolidariser le bras arrière 15 du cadre 1 sans utiliser de pièce de fixation libre comme il sera détaillé plus loin.

Les différents tubes constituant le cadre 1 et le bras arrière 15 sont avantageusement réalisés en aluminium ou en scandium afin que la bicyclette soit légère tout en étant rigide.

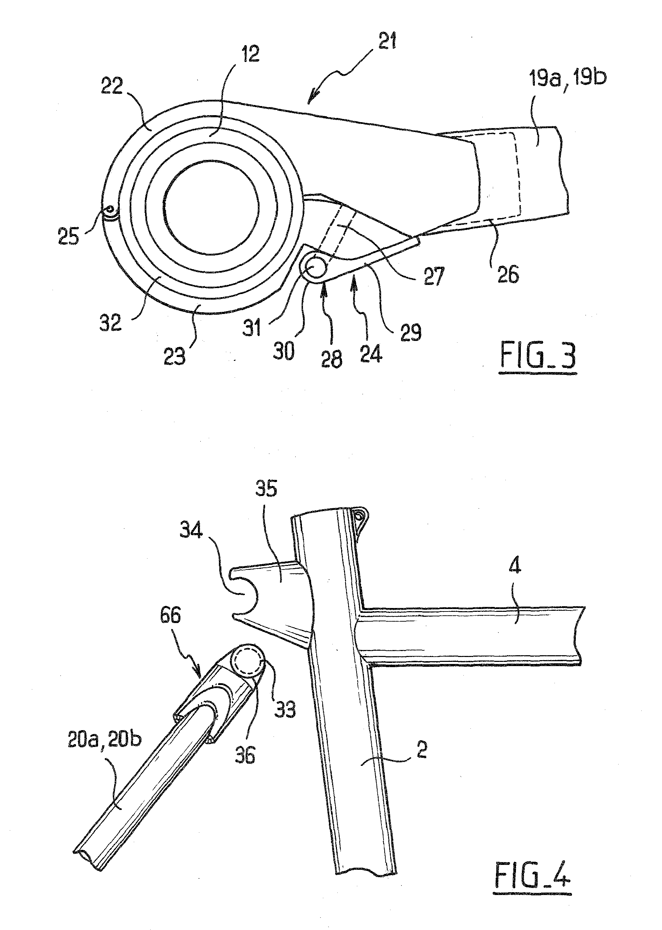

De manière particulièrement avantageuse, en référence aux figures 1 à 3, chaque bras horizontal 19a, 19b du bras arrière 15 est monté pivotant autour de l'axe du boîtier de pédalier 12 positionné à l'extrémité inférieure du tube de selle 2 et du tube oblique 3. A cet effet, chaque bras horizontal 19a, 19b du bras arrière 15 comporte des moyens d'articulation 21 constitués d'un mors fixe 22 hémi-annulaire à l'extrémité libre duquel est articulé un mors mobile 23 hémi-annulaire muni de moyens de fixation 24 dudit mors mobile 22 au mors fixe 23. Le mors mobile 23 est articulé au mors fixe autour d'un axe 25 s'étendant parallèlement à l'axe du boîtier de pédalier 12 lorsque les moyens d'articulation 21 sont solidarisés audit boîtier de pédalier 12. Chaque mors fixe 22 comporte une cheville 26, représentée en traits pointillés sur les figures 2 et 3, sur laquelle est apte à venir s'emboîter le bras horizontal 19a ou 19b du bras arrière 15, chaque bras horizontal 19a, 19b présentant une extrémité proximale creuse de section correspondant à la section de la cheville 26. On notera qu'une telle structure permet un montage aisé du bras arrière 15 sur le cadre 1 sans nécessiter de déformation des bras horizontaux 19a, 19b du bras arrière 15. Ainsi, lors du montage du bras arrière 15, les moyens d'articulation 21 constitués respectivement d'un mors fixe 22 et d'un mors mobile 23 sont préalablement ouvert puis positionnés de part et d'autre du plan sagittal du cadre 1 sur le boîtier de pédalier 12 ; Ensuite, le mors mobile 23 est fermé sur le mors fixe 22 et maintenu en position par des moyens de fixation 24 du mors fixe 22 par rapport au mors mobile 23.

Ces moyens de fixation 24, en référence à la figure 3, sont avantageusement constitués d'un tirant 27 s'étendant à l'extrémité libre du mors mobile 23, apte à venir en prise avec le mors fixe 22 et coopérant avec des moyens de serrage et de traction sous tension 28 dudit tirant 27 afin d'exercer une pression du mors mobile 23 sur le boîtier de pédalier 12 placé entre les mors fixe 22 et mobile 23. Lesdits moyens de serrage et de traction 28 sont constitués d'une manette 29 comportant une tête cylindrique 30 montée en rotation autour d'un axe 31 excentrique parallèle à l'axe de rotation 25 des mors 22, 23, ledit tirant 27 étant solidaire de la manette 29.

Il va de soi que les moyens de fixation 24 peuvent consister dans tout moyen de blocage équivalent bien connu de l'homme de l'art tel que par exemple une vis coopérant avec un trou taraudé pratiqué dans le mors fixe 22 et le mors mobile 23 sans sortir du cadre de l'invention.

Par ailleurs, afin de faciliter la rotation du bras arrière 15 autour du boîtier de pédalier 12, un roulement annulaire 32 s'étendant de part et d'autre du cadre 1 est positionné sur ledit boîtier de pédalier 12 cylindrique qui fait saillie de part et d'autre du cadre 1, les mors fixes 22 et mobiles 23 des moyens d'articulation 21 étant solidarisés par serrage sur lesdits roulement annulaires 32.

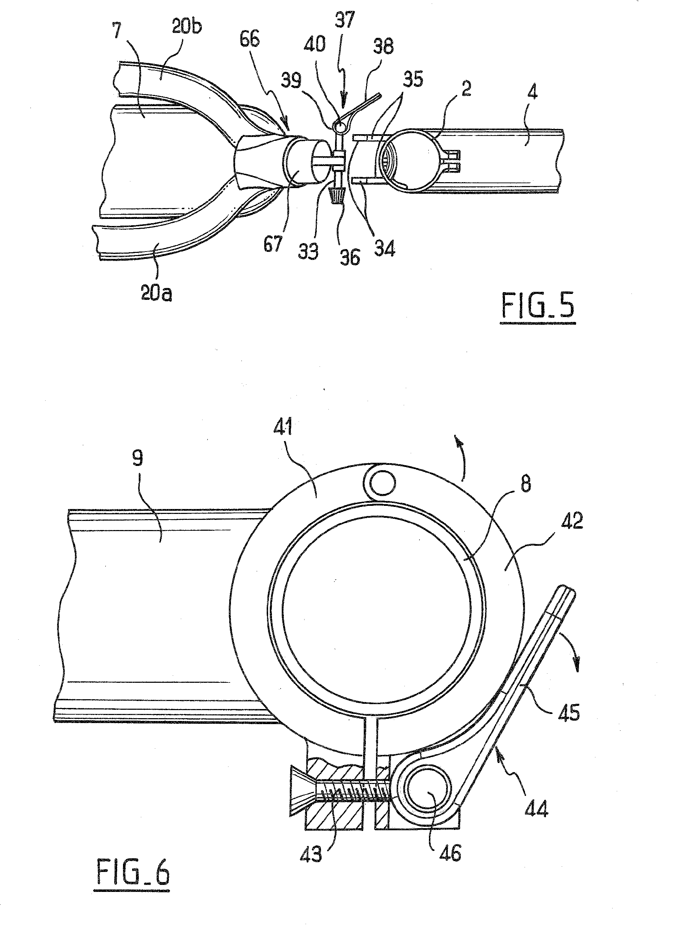

En référence aux figures 4 et 5, l'extrémité proximale des bras obliques arrières 20a, 20b est munie d'un axe 33 s'étendant perpendiculairement auxdits bras obliques arrières 20a, 20b, c'est-à-dire perpendiculairement au plan sagittal du cadre 1, formant un tirant apte à coopérer avec deux encoches 34 en forme de U pratiquées à l'extrémité libre d'au moins deux pattes parallèles 35 s'étendant depuis le tube de selle 2 vers l'arrière de la bicyclette et comprenant à ses extrémités libres respectivement un écrou 36 et des moyens de serrage et de traction 37 sous tension dudit tirant 33 afin de bloquer ledit tirant 33 dans les encoches 34.

Il est bien évident que les encoches 34 peuvent être substituées par une gorge de section en forme de U formée à l'extrémité libre d'une patte s'étendant depuis le tube de selle 2 vers l'arrière de la bicyclette.

Lesdits moyens de serrage et de traction 37 sont constitués d'une manette 38 dont la tête cylindrique 39 est montée en rotation autour d'un axe excentrique 40 perpendiculaire à l'axe longitudinal du tirant 33 et coopérant avec les flancs des pattes 35.

Selon une variante d'exécution de la bicyclette conforme à l'invention, non représentée sur les figures, l'extrémité proximale des bras obliques arrières 20a, 20b est munie d'une gorge de section en forme de U dont l'axe longitudinal s'étend perpendiculairement aux bras obliques arrières 20a, 20b, c'est-à-dire perpendiculairement au plan sagittal du cadre 1, et apte à recevoir un axe solidaire du cadre 1 et s'étendant perpendiculairement au plan sagittal de ce dernier, ledit axe formant un tirant qui comprend à ses extrémités libres respectivement un écrou et des moyens de serrage et de traction sous tension dudit tirant afin de bloquer le tirant dans la gorge. Lesdits moyens de serrage et de traction sont alors constitués d'une manette dont la tête cylindrique est montée en rotation autour d'un axe excentrique perpendiculaire à l'axe longitudinal du tirant et coopérant avec les flancs des bras obliques arrières 20a, 20b.

En référence aux figures 1 et 6, le guidon 8 est fixé de manière amovible à l'extrémité distale libre de la potence 9 solidaire de la fourche 5 par des moyens de fixation. Lesdits moyens de fixation sont constitués d'un mors fixe hémi-cylindrique 41 solidaire de l'extrémité libre de la potence 9 et d'un mors mobile hémi-cylindrique 41 articulé au mors fixe 41, lesdits moyens de fixation comportant des moyens de blocage du mors fixe 41 par rapport au mors mobile 42 pour assurer le serrage du guidon 8 entre les mors fixe 41 et mobile 42. Ces moyens de blocage sont constitués d'un tirant 43 apte à venir en prise avec l'extrémité libre du mors mobile 42 et coopérant avec des moyens de serrage et de traction 44 sous tension dudit tirant 43 afin d'exercer une pression du mors mobile 42 sur le guidon 8 placé entre les mors fixe 41 et mobile 42. Ces moyens de serrage et de traction 44 sont constitués d'une manette 45 montée en rotation autour d'un axe 46 parallèle à l'axe des mors 41 et 42, ledit tirant 43 étant solidaire de la manette 45.

On notera que de tels moyens de fixation du guidon 8, ou de tout autre moyen de direction, permet de fixer ou de retirer ledit guidon 8 sans utiliser de pièce de fixation libre que le cycliste pourrait égarer lors du pliage ou du dépliage de la bicyclette.

Il est bien évident que le mors mobile 42 peut être articulé à l'extrémité libre de la potence 9 sans pour autant sortir du cadre de l'invention.

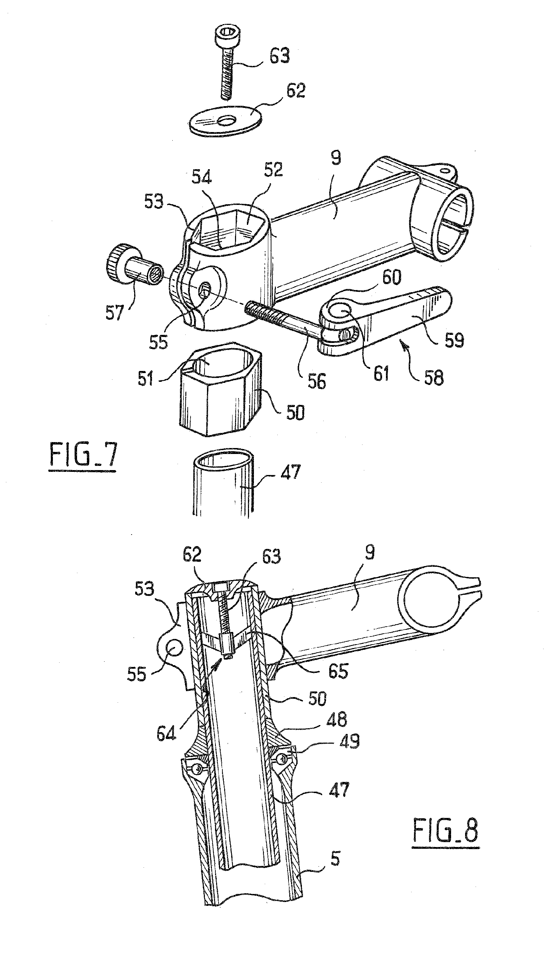

En référence aux figures 7 et 8, les moyens de solidarisation de la potence 9 au tube de fourche sont constitués d'une pièce de liaison cylindrique 47 dont l'extrémité inférieure est solidaire d'une couronne 48 en prise avec un roulement annulaire 49 solidaire de l'extrémité supérieure du tube de fourche 5. L'extrémité supérieure de cette pièce de liaison 47 est apte à recevoir un organe déformable 50 de forme hexagonale, ou similaire, comportant un évidement central cylindrique 51 de diamètre interne tout juste égal au diamètre externe de la pièce de liaison 47 de telle manière que l'organe déformable soit apte à coulisser le long de la pièce de liaison 47. Ledit organe déformable 50 est apte à être introduit dans un évidement 52 de section en forme d'hexagone, ou similaire, formé entre deux mors fixes déformables 53 et 54 de l'extrémité proximale de la potence 9. Lesdits mors fixes 53 et 54 comportent respectivement un trou 55 traversé par un tirant 56 dont les extrémités libres comprennent respectivement un écrou 57 et des moyens de serrage et de traction 58 sous tension dudit tirant 56 afin de serrer les mors 53 et 54 sur l'organe déformable 50. Lesdits moyens de serrage et de traction 58 sont constitués d'une manette 59 dont la tête cylindrique 60 est montée en rotation autour d'un axe excentrique 61 perpendiculaire à l'axe longitudinal du tirant 56 et coopérant avec les flancs des mors 53 et 54.

Lesdits moyens de solidarisation comportent, par ailleurs, un capot 62 prenant appui sur l'extrémité supérieure des mors 53 et 54 et traversé par une vis 63 coopérant avec une pièce en étoile 64 dont les branches 65 prennent appui sur la paroi intérieure de la pièce de liaison cylindrique 47.

Ainsi, le cycliste peut d'une part régler la direction de la potence 9 par rapport au tube de fourche 5 et d'autre part régler la hauteur de ladite potence 9 en ouvrant puis en fermant la manette 59 après avoir ajuster ladite direction et/ou ladite hauteur de la potence.

Par ailleurs, en référence à la figure 1, les bras obliques arrières 20a,20b du bras arrière 15 concourent en un segment de tube unique 66 à proximité de leurs extrémités distales, ledit segment de tube unique 66 étant muni des moyens de solidarisation des bras obliques arrières 20a,20b au tube de selle 2.

De manière particulièrement avantageuse, le bras arrière 15 comporte un amortisseur 67, ou tout autre moyen d'amortissement équivalent bien connu de l'homme de l'art, positionné entre l'axe du moyeu de la roue arrière 16 et les moyens de solidarisation des bras obliques arrières 20a,20b au tube de selle 2, et plus précisément positionné au niveau du segment de tube unique 66.

On décrira maintenant, en référence aux figures 1 et 9 à 11, les différentes étapes de pliage de la bicyclette conforme à l'invention.

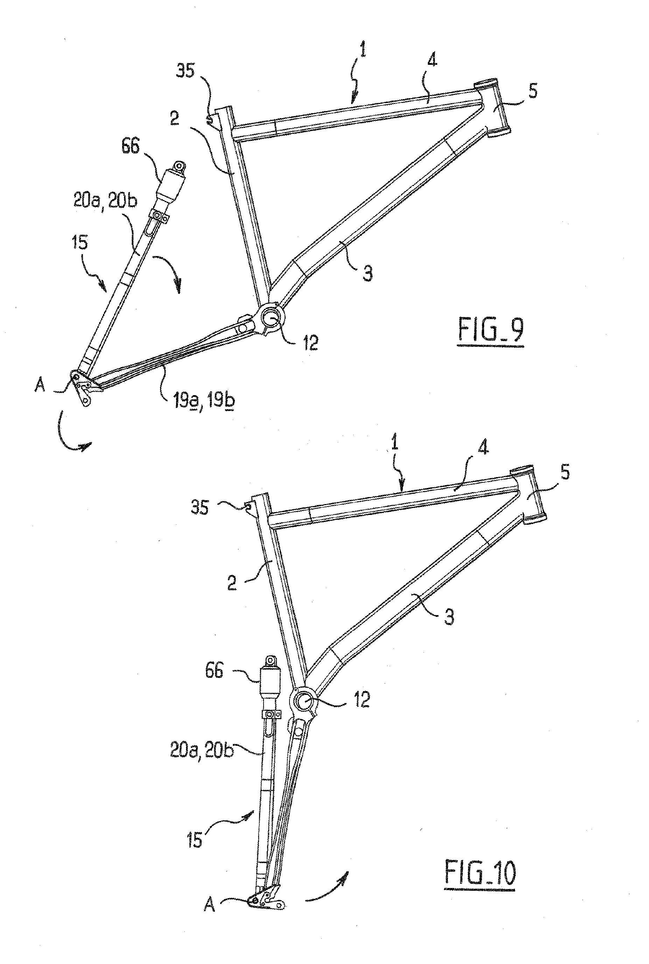

En référence aux figures 1 et 9, les roues avant 7 et arrière 16 sont préalablement retirées, puis la manette 38 des moyens de serrage et de traction 37 est ouverte afin de libérer le tirant 33 des encoches 34. Ainsi, les bras obliques arrières 20a et 20b étant libérés, le bras arrière 15 est désormais libre en rotation autour du boîtier de pédalier 12. Les bras obliques arrières 20a et 20b du bras arrière 15 sont alors entraîné en rotation, en référence aux figures 9 à 11, vers les bras horizontaux 19a et 19b autour de leur articulation A jusqu'à ce que les tubes obliques arrières 20a, 20b s'étendent globalement parallèlement aux bras horizontaux 19a,19b. Successivement ou simultanément, les bras horizontaux 19a,19b du bras arrière 15 sont entraînés en rotation autour du boîtier de pédalier 12 jusqu'à ce que les bras obliques 20a,20b et horizontaux 19a,19b s'étendent parallèlement au tube horizontal 4 du cadre 1.

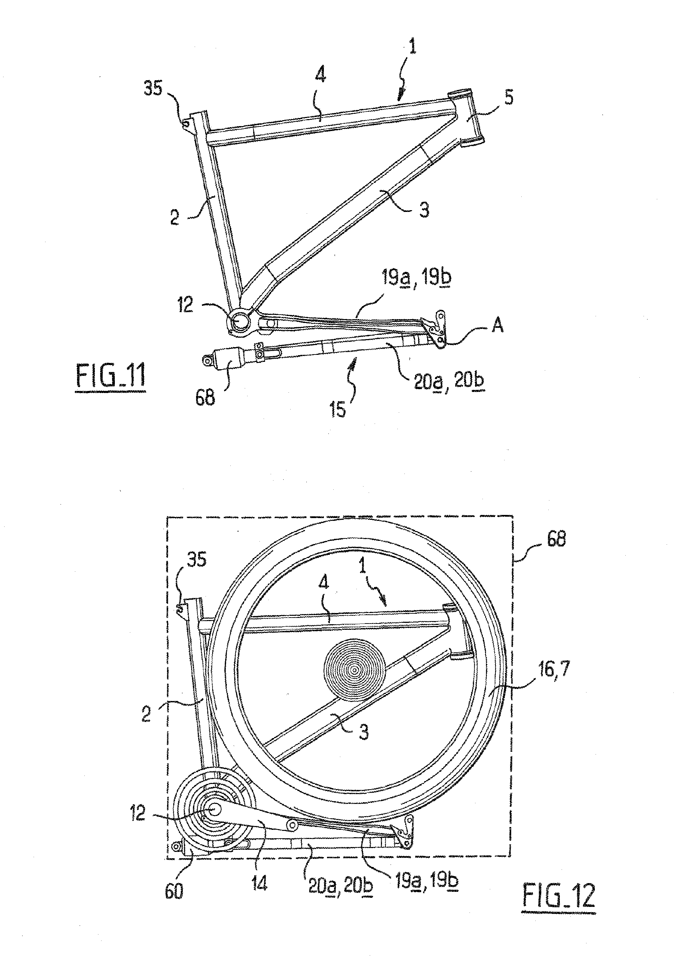

Après avoir retiré l'ensemble guidon 8 et potence 9 en ouvrant la manette 59, en référence à la figure 7, les roues avant 7 et arrière 16 sont placées respectivement de part et d'autre du cadre 1, en référence à la figure 12, de telle manière qu'elles s'étendent parallèlement au cadre 1 au dessus des bras obliques 20a,20b et horizontaux 19a,19b du bras arrière 15. La bicyclette ainsi repliée est apte à tenir dans un sac 68 définissant un volume inscrit dans un parallélépipède. Ce sac 68 est obtenu dans une matière semi-rigide et présente d'une part une longueur et une hauteur interne tout juste supérieure au diamètre des roues avant 7 et arrière 16 et d'autre part une profondeur interne tout juste supérieure à la somme des épaisseurs du cadre 1 et des roues avant 7 et arrière 16. A titre d'exemple non limitatif, pour une bicyclette dont les roues présentent un diamètre de 675mm, le sac présente une longueur d'environ 800mm, une hauteur d'environ 800mm et une épaisseur d'environ 450mm. De préférence, le sac 68 présente une longueur et une hauteur comprise entre 1,2 et 1,4 fois le diamètre des roues (7,16) de ladite bicyclette et une profondeur comprise entre 420 et 440 mm.

Il va de soi que le bras arrière 15 peut être articulé au cadre 1 par tout moyen approprié, les bras dit obliques arrières 20a,20b du bras arrière 15 pouvant, par exemple, être solidarisés de manière amovible au tube dit horizontal 4 du cadre 1.

Enfin, il est bien évident que la bicyclette pliable suivant l'invention pourra être adaptée pour un vélo de route, la fourche télescopique étant alors substituée par une fourche rigide et l'amortisseur 50 retiré, et que les exemples que l'on vient de donner ne sont que de illustrations particulières en aucun cas limitatives quant aux domaines d'application de l'invention.

## Revendications

1. - Bicyclette pliable du type comportant d'une part un châssis dit cadre (1) portant un boîtier de pédalier (12) et d'un tube de fourche (5) portant une fourche (6) à l'extrémité inférieure de laquelle est solidarisé l'axe de la roue avant (7) de direction et à l'extrémité supérieure de laquelle sont solidarisés des moyens de direction (8,9), et d'autre part un bras arrière (15) solidaire du cadre (1) et portant l'axe du moyeu d'une roue arrière motrice (16), le couple moteur étant transmis à la roue motrice (16) par une chaîne (17) s'étendant entre un pignon menant (13) solidaire du cadre (1) et un pignon mené (18) solidaire de l'axe du moyeu de la roue motrice (16) ; ladite bicyclette est **caractérisée en ce que** le bras arrière (15) est constitué de deux bras dits horizontaux (19a,19b) dont l'une des extrémités dite proximale est articulée au cadre et dont l'autre extrémité dite distale est articulée respectivement à l'une des extrémités de deux bras dits obliques arrières (20a,20b), l'autre extrémité dite proximale desdits bras obliques arrières (20a,20b) étant munie de moyens de solidarisation mâles ou femelles aptes à coopérer avec des moyens de solidarisation femelles ou respectivement mâles du cadre (1).

2. - Bicyclette pliable suivant la revendication 1, **caractérisée en ce que** l'extrémité distale des bras horizontaux (19a,19b) du bras arrière (15) porte l'axe du moyeu de la roue arrière (16).

3. **-** Bicyclette pliable suivant la revendication 1, **caractérisée en ce que** l'extrémité distale des bras obliques arrières (20a,20b) du bras arrière (15) portent l'axe du moyeu de la roue arrière (16).

4. **-** Bicyclette pliable suivant l'une quelconque des revendications 1 à 3, **caractérisée en ce que** le cadre (1) consiste en un cadre triangulaire constitué d'un tube dit de selle (2), d'un tube oblique (3) et d'un tube horizontal (4), les extrémités du tube oblique (3) et du tube horizontal (4) étant solidaires respectivement du tube de selle (2) et du tube de fourche (5).

5. - Bicyclette pliable suivant l'une quelconque des revendications 1 à 4, **caractérisée en ce que** les bras horizontaux (19a,19b) du bras arrière (15) sont montés pivotant autour de l'axe du boîtier de pédalier (12), ledit boîtier de pédalier (12) portant l'axe du pignon menant (13).

6. **-** Bicyclette pliable suivant la revendication 5, **caractérisée en ce que** chaque bras horizontal (19a,19b) du bras arrière (15) comporte des moyens d'articulation constitués d'un mors fixe (22) hémi-annulaire à l'extrémité libre duquel est articulé un mors mobile (23) hémi-annulaire muni de moyens de fixation (24) dudit mors mobile (23) au mors fixe (22).

7. - Bicyclette pliable suivant la revendication 6, **caractérisé en ce que** chaque mors fixe (22) annulaire comporte une cheville (26) sur laquelle est apte à venir s'emboîter le bras horizontal (19a,19b) du bras arrière (15).

8. - Bicyclette pliable suivant l'une quelconque des revendications 6 ou 7, **caractérisée en ce qu'**elle comporte deux roulements annulaires (32) s'étendant respectivement de part et d'autre du cadre (1) sur le boîtier de pédalier (12) cylindrique qui fait saillie de part et d'autre du cadre (1), les mors fixes (22) et mobiles (23) des moyens d'articulation étant solidarisés par serrage auxdits roulements annulaires (32).

9. - Bicyclette pliable suivant l'une quelconque des revendications 1 à 8, **caractérisée en ce que** l'extrémité proximale des bras obliques arrières (20a,20b) est munie d'un axe (33) s'étendant perpendiculairement auxdits bras obliques arrières (20a,20b), c'est-à-dire perpendiculairement au plan sagittal du cadre (1), formant un tirant (33) apte à coopérer avec des encoches (34) de section en forme de U formée à l'extrémité libre d'au moins deux pattes (35) s'étendant depuis le tube de selle (2) vers l'arrière et comprenant à ses extrémités libres respectivement un écrou (36) et des moyens de serrage et de traction (37) sous tension dudit tirant (33) afin de bloquer le tirant (33) dans les encoches (34).

10. **-** Bicyclette suivant l'une quelconque des revendications 1 à 8, **caractérisée en ce que** l'extrémité proximale des bras obliques arrières (20a,20b) est munie d'une gorge de section en forme de U dont l'axe longitudinal s'étend perpendiculairement auxdits bras obliques arrières (20a,20b), c'est-à-dire perpendiculairement au plan sagittal du cadre (1), et apte à recevoir un axe solidaire du cadre (1) et s'étendant perpendiculairement au plan sagittal, ledit axe formant un tirant qui comprend à ses extrémités libres respectivement un écrou et des moyens de serrage et de traction sous tension dudit tirant afin de bloquer le tirant dans la gorge.

11. **-** Bicyclette pliable suivant l'une quelconque des revendications 9 ou 10, **caractérisée en ce que** les moyens de serrage et de traction (37) sont constitués d'une manette (38) montée en rotation autour d'un axe (39) perpendiculaire à l'axe longitudinal du tirant (33) et coopérant avec les flancs des pattes (35) ou de l'extrémité proximale des bras obliques arrières (20a,20b).

12. - Bicyclette pliable suivant l'une quelconque des revendications précédentes, **caractérisée en ce que** le bras arrière (15) comporte un moyen d'amortissement (67) positionné entre l'axe du moyeu de la roue arrière (7) et les moyens de solidarisation des bras obliques arrières (20a,20b) au cadre (1).

13. - Bicyclette pliable suivant l'une quelconque des revendications précédentes, **caractérisée en ce que** les bras obliques arrières (20a,20b) concourent en un segment de tube unique (66) à proximité de leurs extrémités distales, ledit segment de tube unique (66) étant muni des moyens de solidarisation des bras obliques arrières (20a,20b) au cadre (1).

14. - Bicyclette pliable suivant l'une quelconque des revendications précédentes, repliée et rangée dans un sac (51) définissant un volume intérieur inscrit dans un parallélépipède présentant une longueur et une hauteur comprise entre 1,2 et 1,4 fois le diamètre des roues (7,16) de ladite bicyclette.

15. **-** Dispositif d'articulation d'un bras dit arrière (15) portant le moyeu de la roue arrière d'une bicyclette sur un cadre (1) portant un boîtier de pédalier (12) **caractérisé en ce qu'**il est constitué d'un mors fixe (22) hémi-annulaire solidaire dudit bras arrière (15) et à l'extrémité libre duquel est articulé un mors mobile (23) hémi-annulaire muni de moyens de fixation dudit mors mobile (23) au mors fixe (22), lesdits mors fixe (22) et mobile (23) étant positionnés sur le boîtier de pédalier (12) de telle manière que le bras arrière (15) soit monté pivotant autour de l'axe dudit boîtier de pédalier (12).

16. **-** Dispositif d'articulation suivant la revendication 15, **caractérisé en ce que** chaque mors fixe hémi-annulaire (22) comporte une cheville (26) sur laquelle est apte à venir s'emboîter le bras arrière (15).

17. - Dispositif d'articulation suivant l'une quelconque des revendications 15 ou 16, **caractérisé en ce qu'**il comporte deux roulements annulaires (32) solidaires du boîtier de pédalier (12) cylindrique qui fait saillie de part et d'autre du cadre (1), lesdits roulements (32) s'étendant respectivement de part et d'autre du cadre (1) et les mors fixes (22) et mobiles (23) étant solidarisés par serrage auxdits roulements annulaires (32).
